# EUROPEAN PATENT APPLICATION

(11) **EP 3 799 374 A1**
(43) Date of publication of application: **31.03.2021**
(21) Application number: 19306207.2
(22) Date of filing: 26.09.2019
(51) Int. Cl.: H04L 12/851, H04L 12/841, H04L 12/863, H04L 12/865

(54) **METHOD FOR TRANSMITTING DATA PACKETS AND APPARATUS FOR IMPLEMENTING THE SAME**

(71) Applicant: Mitsubishi Electric R&D Centre Europe B.V., 1119 NS Schiphol Rijk Amsterdam (NL); Mitsubishi Electric Corporation, Tokyo 100-8310 (JP)
(72) Inventor: ROLLET, Romain, 35708 Rennes Cedex 7 (FR)
(74) Representative: Plasseraud IP

(57) **Abstract**

A method for transmitting data packets is provided, which comprises, during a current transmission cycle in a plurality of successive time cycles, the current cycle comprising a plurality of successive time periods: obtaining one or several first data packets, respective first metadata of the one or several first data packets, and a first transmission priority associated with the one or several first data packets, wherein the one or several first data packets are stored in a memory of a processor; based on the first transmission priority, adding the first metadata to a first waiting queue in the memory of the processor; during a first time period of the current transmission cycle reserved for transmission of data packets associated with the first priority, transfer the first metadata from the first waiting queue to an interface transmission queue, wherein the interface transmission queue is comprised in a data communication interface between the processor and a MAC controller; and transmit the one or several first data packets over a transmission medium through the transfer, based on the first metadata in the interface transmission queue, of the one or several first data packets from the memory to a transmission queue in the MAC controller.

## Description

The present disclosure relates to the field of packet communication in a packet data network, in particular to the delivery of time-sensitive packets in a network.

Time-Sensitive Networking (TSN) is a set of standards developed by the Time-Sensitive Networking task group of the IEEE 802.1 working group which provide scheme for time-sensitive or time-critical transmission of data in Ethernet networks. Applications include real time audio/video streaming and time-critical control signals (such as real-time control signals) in automotive or industrial networks. The IEEE 802.1Qbv time-aware scheduler may be used to provide on-time delivery of TSN frames.

IEEE 802.1Qbv defines a means to transmit certain TSN Ethernet frames on a schedule, while allowing non-TSN Ethernet frames to be transmitted on a best effort basis around the TSN frames. Because all network nodes are synchronized, a device supporting IEEE 802.1Qbv can deliver critical communication very quickly and with a very low jitter in delivery.

However, the IEEE 802.1Qbv access control mechanism requires the Ethernet transmitter to be able to transmit some Ethernet frames at a precise time with a good accuracy (< 200ns) to respect time slices used in IEEE 802.1Qbv. Those Ethernet frames for which transmission is time-critical coexist with standard Ethernet frames that are transmitted with the access control mechanisms such as the ones introduced by 802.1Q. Such performance requirements typically lead to the development of specific Ethernet MAC controllers, that is, controllers with a specific extension developed for TSN support. This severely limits the use of TSN, not only for cost reasons, but also because TSN cannot be used on low-cost off-the-shelf microcontroller devices.

There is therefore a need for providing an improved method for transmitting data packets and network node implementing the same that address at least some of the above-described drawbacks and shortcomings of the conventional technology in the art.

It is an object of the present subject disclosure to provide an improved method for transmitting data packets and apparatus implementing the same.

Another object of the present subject disclosure is to provide an improved method for transmitting data packets and apparatus implementing the same for alleviating the above-described drawbacks and shortcomings of conventional time-sensitive data delivery scheme in computer networks, in particular in Ethernet networks.

Yet another object of the present subject disclosure is to provide an improved method for transmitting data packets and apparatus implementing the same for transmitting some Ethernet frames at a specified time with a required accuracy, and managing different time slices as defined in the IEEE 802.1qbv standard.

To achieve these objects and other advantages and in accordance with the purpose of the present subject disclosure, as embodied and broadly described herein, in one aspect of the present subject disclosure, a method for transmitting data packets is proposed. The method comprises: during a current transmission cycle in a plurality of successive time cycles, the current transmission cycle comprising a plurality of successive time periods: obtaining one or several first data packets, respective first metadata of the one or several first data packets, and a first transmission priority associated with the one or several first data packets, wherein the one or several first data packets are stored in a memory of a processor; based on the first transmission priority, adding the first metadata to a first waiting queue in the memory of the processor; during a first time period of the current transmission cycle reserved for transmission of data packets associated with the first priority, transfer the first metadata from the first waiting queue to an interface transmission queue, wherein the interface transmission queue is comprised in a data communication interface between the processor and a MAC controller; and transmit the one or several first data packets over a transmission medium through the transfer, based on the first metadata in the interface transmission queue, of the one or several first data packets from the memory to a transmission queue in the MAC controller.

The proposed method can advantageously be implemented to operate with any device that embeds a standard MAC Ethernet controller, for example for use of the IEEE 802.1Qbv scheduler for time-sensitive delivery of Ethernet frames. Indeed, the proposed method can be implemented in software, using a real-time operating system specifically designed for embedded applications. Further, the proposed method can advantageously be implemented to operate with small microcontroller devices embedding a standard MAC Ethernet controller which are widely used in automotive or industrial networks.

In one or more embodiments, the proposed method may further comprise, obtaining a second data packets, second metadata of the second data packet, and a second transmission priority associated with the second data packet, wherein the second data packet is stored in the memory of the processor; based on the second transmission priority, adding the second metadata to a second waiting queue in the memory of the processor; during the first time period, after a first priority transmission time slot dedicated to transmission of data packets with first priority and comprised in the first time period, transfer the second metadata from the second waiting queue to the interface transmission queue; and during a second time period of the current transmission cycle following the first time period, transmit the second packet data over the transmission medium through the transfer, based on the second metadata in the interface transmission queue, of the second data packet from the memory to the transmission queue in the MAC controller.

In one or more embodiments, the first time period and the second time period are successive in time, with no overlap.

In one or more embodiments, the proposed method may further comprise, obtaining a second data packet, second metadata of the second data packet, and a second transmission priority associated with the second data packet, wherein the second data packet is stored in the memory of the processor; if the second data packet is not obtained during the first time period, adding the second metadata to the interface transmission queue; and during a second time period of the current transmission cycle reserved for transmission of data packets associated with the second priority, transmit the second packet data over the transmission medium through the transfer, based on the second metadata in the interface transmission queue, of the second data packet from the memory to the transmission queue in the MAC controller.

In one or more embodiments, the first transmission priority is for transmission in real-time of data packets, and the second transmission priority is for transmission in non-real-time of data packets.

In one or more embodiments, the proposed method may further comprise: receiving, from one or several first tasks executed by the processor, one or several requests for transmission of the one or several first data packets over the transmission medium, wherein each request includes the first transmission priority, or one or more of the first tasks is associated with the first transmission priority.

In one or more embodiments, the one or several first data packets are transmitted by the MAC controller during a first priority transmission time slot (dedicated to transmission of data packets with first priority and) comprised in the first time period, the method further comprising: disabling data transmission at the MAC controller during a first transmit disable time period and/or a second transmit disable time period, wherein the first transmit disable time period occurs during the first time period before the first priority transmission time slot, and the second transmit disable time period occurs during the first time period after the first priority transmission time slot.

In one or more embodiments, the current transmission cycle comprises a time guard period occurring immediately before the first time period, during which data transmission at the MAC controller is disabled.

In one or more embodiments, the second data packet is transferred from the second waiting queue to the interface transmission queue during the first time period after the end of the first priority transmission time slot.

In one or more embodiments, the first metadata is transferred from the first waiting queue to the interface transmission queue, and the one or several first data packets are transferred, based on the first metadata in the interface transmission queue, from the memory to the transmission queue during the first time period after a first predetermined time before the start of the first priority transmission time slot.

In one or more embodiments, the proposed method may further comprise: enabling the transmission, by the MAC controller, of the one or several first data packets over the transmission medium during the first time period after a second predetermined time before the start of the first priority transmission time slot.

In one or more embodiments, the proposed method may further comprise, disabling the reception of data packets with the first transmission priority during the first time period after the first predetermined time and while the transmission of data packets of first transmission priority by the MAC controller, during a first priority transmission time slot, is not completed.

In one or more embodiments, the proposed method may further comprise: adding the first metadata to the first waiting queue based on a determination that a data amount corresponding to a cumulative size of corresponding first data packets associated with the first transmission priority can be transmitted during a first priority transmission time slot dedicated to transmission of data packets with first priority and comprised in the first time period.

In another aspect of the present subject disclosure, an apparatus is proposed, which comprises a processor, a memory operatively coupled to the processor, and network interfaces to communicate in a computer network, wherein the apparatus is configured to perform one or more embodiments of a method for transmitting data packets as proposed in the present subject disclosure.

In yet another aspect of the present subject disclosure, a non-transitory computer-readable medium encoded with executable instructions which, when executed, causes an apparatus comprising a processor operatively coupled with a memory, to perform a method for transmitting data packets as proposed in the present subject disclosure, is proposed.

In yet another aspect of the present subject disclosure, a computer program product comprising computer program code tangibly embodied in a computer readable medium, said computer program code comprising instructions to, when provided to a computer system and executed, cause said computer to perform a method for transmitting data packets as proposed in the present subject disclosure, is proposed. In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figures 1 shows an exemplary sequence of two successive time cycles of the IEEE 802.1Qbv time-aware scheduler that may be used in one or more embodiments of the present subject disclosure;
Fig. 2 shows the block diagram of an exemplary Ethernet MAC connected to an Ethernet physical layer (PHY) and to a bus memory that may be used in one or more embodiments of the present subject disclosure;
Figure 3 illustrates the definition of the jitter applied to a real-time process;
Figure 4 is a schematic block diagram of an exemplary network node/device configured to use a data packet transmission feature in accordance with one or more embodiments of the present subject disclosure;
Figure 5 is a block diagram of an exemplary method for transmitting data packets in accordance with one or more embodiments of the present subject disclosure;
Figure 6 is a schematic block diagram of an exemplary network node/device configured to use a data packet transmission feature in accordance with one or more embodiments of the present subject disclosure;
Figure 7 illustrates an exemplary scheme for distributing Ethernet frames over different queues according to one or more embodiments of the present subject disclosure.
Figure 8 illustrates events that may be defined for a cycle, as configured in a device implementing the proposed method.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms « memory » and « computer storage media" include any type of data storage device, such as, without limitation, a hard drive, a flash drive or other flash memory devices (e.g. memory keys, memory sticks, key drive), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Python, Visual Basic, SQL, PHP, and JAVA.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

In the following description and claims, the terms "coupled" and "connected", along with their derivatives, may be indifferently used to indicate that two or more elements are in direct physical or electrical contact with each other, or two or more elements are not in direct contact with each other, but yet still co-operate or interact with each other.

In the following description and claims, the terms "payload", "payload data", "message", "packet", and "data packet" may be indifferently used, and may include data blocks, protocol data units or any unit of data that may be routed or transmitted between nodes or stations or across a network. A packet may include a group of bits, which may include one or more address fields, control fields and data, for example. A data block may be any unit of data or information bits.

For the purposes of the present disclosure, the term "server" is used herein to refer to a service point which provides processing, database, and communication facilities. By way of example, and not limitation, the term "server" can refer to a single, physical processor with associated communications and data storage and database facilities, or it can refer to a networked or clustered complex of processors and associated network and storage devices, as well as operating software and one or more database systems and applications software which support the services provided by the server. Servers may vary widely in configuration or capabilities, but generally a server may include one or more central processing units and memory. A server may also include one or more mass storage devices, one or more power supplies, one or more wired or wireless network interfaces, one or more input/output interfaces, or one or more operating systems, such as Windows Server, Mac OS X, Unix, Linux, FreeBSD, or the like.

For the purposes of the present disclosure, a "computer network" should be understood to refer to a network that may couple devices (also referred to herein as "nodes") so that data communications may occur between devices, including between wireless devices operatively connected via a wireless network, for example. A network may also include mass storage, such as network attached storage (NAS), a storage area network (SAN), or other forms of computer or machine readable media, for example, and may include or be operatively connected to a server. A network may include the Internet, one or more local area networks (LANs), one or more wide area networks (WANs), wire-line type connections, wireless type connections, cellular, such as carrier telephone lines, optical fibers, synchronous optical networks, synchronous digital hierarchy links, powerline communication links (e.g. IEEE 61334, IEEE P1901.2), Ethernet, Bluetooth, Bluetooth Low Energy (BLE) or Bluetooth Smart, WiFi or any connection based on a IEEE802.11x protocols, ZigBee or any connection based on the IEEE802.15.4 protocol, Z-Wave, 6LowPAN (IPv6 Low-power wireless Personal Area Network), Thread, Sigfox, Neul, LoRa, any NFC connection, 2G (including GSM/GPRS/EDGE)/3G (including UMTS/HSPA)/4G (including LTE and LTE-Advanced)/5G cellular, or any combination thereof. Various types of devices, for example gateways, may be made available to provide an interoperable capability for differing architectures or protocols used in the network. Any number of nodes, devices, apparatuses, links, interconnections, etc. may be used in a computer network according to the present subject disclosure.

A communication link or channel may include, for example, analog telephone lines, full or fractional digital lines, wireless links including satellite links, or other communication links or channels, such as may be known to those skilled in the art.

A computing device of a network, for example a sensor node or an actuator node, may be capable of transmitting or receiving signals, such as via a wired or wireless network, and/or may be capable of processing and/or storing data.

It should be understood that embodiments of the present subject disclosure may be used in a variety of applications. Although the present invention is not limited in this respect, the method for transmitting data packets disclosed herein may be used in many apparatuses such as in any network node of a packet-switched network, such as, for example, a network node of an Ethernet network (e.g., an Ethernet switch, an Ethernet bridge, or an Ethernet router). For clarity, the following description focuses on Ethernet networks. However, technical features of the present invention are not limited thereto.

As discussed above, TSN is the IEEE 802.1-defined technology to provide deterministic messaging on standard Ethernet for real-time communication over Ethernet networks, in particular for automotive and industrial networks. The on-time delivery of TSN frames is addressed in the 802.1Qbv TSN component, which defines a scheme for transmitting certain Ethernet frames for which transmission is time-sensitive (referred to in the following as "TSN frames" or "real-time frames") according to a transmission schedule, while allowing non-TSN Ethernet frames to be transmitted on a best effort basis around the TSN frames.

The different TSN standards defined by the IEEE 802.1 Time-Sensitive Networking task group can be grouped in three component categories:
(1) Time synchronization: time in TSN networks is usually distributed from one master source to all the network nodes. In most cases, this is done using the IEEE 1588 Precision Time Protocol, which utilizes Ethernet frames to distribute time synchronization information.
(2) Scheduling and traffic shaping: Scheduling and traffic shaping allows for the coexistence of different traffic classes with different priorities on the same network. TSN enhances standard Ethernet communication by adding mechanisms to ensure timely delivery with soft and hard real-time requirements.
(3) Selection of communication paths, path reservations and fault-tolerance mechanisms.

As to the scheduling component, for each priority, a user can select from different access control and scheduling mechanisms how Ethernet frames are processed. Thereby, some priority can be assigned to already existing methods (such as the IEEE 802.1Q strict priority scheduler) or some new processing methods, such as the TSN IEEE 802.1Qbv time-aware traffic scheduler.

The IEEE 802.1Qbv time-aware scheduler is designed to separate the communication on the Ethernet network into fixed length, repeating time cycles. Within these cycles, different time slices can be configured that can be assigned to one or several of Ethernet priorities. This time-slicing scheme can be used to grant exclusive use to the Ethernet transmission medium to those traffic classes that have stringent real-time constraints. This exclusive access eliminates buffering effects in the Ethernet switch transmission buffers, and time-critical traffic can be transmitted without non-deterministic interruptions. Time slices can be considered as virtual communication channels, and enable the separation of time-critical communication from non-time-critical background traffic.

When an Ethernet interface has started the transmission of a frame on a transmission medium, this transmission has to be completely finished before another transmission can take place. Consequently, the IEEE 802.1Qbv time-aware scheduler has to ensure that the Ethernet interface is not busy with the transmission of a frame when the scheduler switches from one time slice to the next. To do that, a guard band is inserted in front of every time slice that carries time-critical traffic. During this guard band time, a transmitter is not allowed to start a new transmission, and only already ongoing transmissions may be completed. The guard band duration depends on the maximum frame size and the Data Link speed

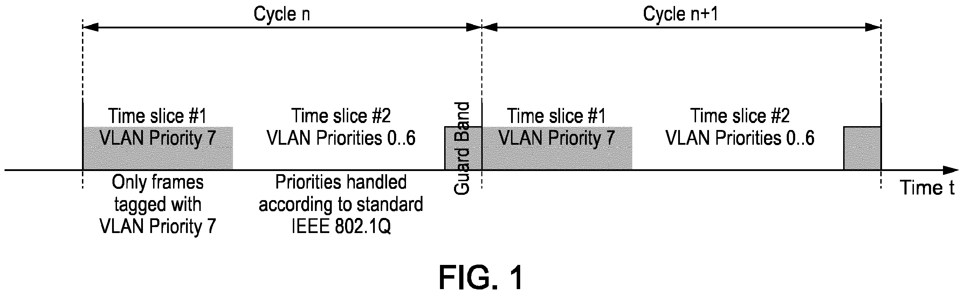

Fig. 1 shows an exemplary sequence of two successive time cycles, each comprising two time slices and a guard band. In the illustrated sequence, among the two time slices, a first time slice (#1) is configured to be associated with a highest priority (VLAN Priority 7) corresponding to time-critical traffic, so that only time-critical TSN frames tagged with VLAN priority 7 are transmitted during the first time slice. A second time slice (#2) is configured to be associated with one or more lower priorities (VLAN Priorities 0 to 6) corresponding to non-time-critical traffic, and priorities are handled according to the standard IEEE 802.1Q protocol for transmission of non-time-critical TSN frames during the first time slice.

The guard band is located at the end of the time slice, immediately before the first time slice (#1) of the following time cycle.

As TSN defines at most 8 priority levels, priority levels (0 ... 7) could also be respectively associated with 8 time slices (1 ... 8).

In another example, 3 sets of priority levels (priority 7, priority 6, and priorities 0 ... 5) could also be respectively associated with 8 time slices (1, 2, and 3).

In order to reduce the loss of bandwidth induced by the guard band, the IEEE 802.1Qbv standard has introduced a length-aware scheduling mechanism, which checks whether a frame can be transmitted inside the guard band without any infringement of the following slice (with high priority).

Modern microcontroller units (MCUs) typically include some Ethernet Medium Access Controller (MAC) peripheral. They reduce the integration cost by reducing the number of components. Currently on the market, Ethernet controller embedded into MCU and low-cost microprocessor units (MPUs) are compliant with the basic IEEE standards such as 10BASE-T/100BASE-TX 802.3 for Ethernet MAC, 1588-2008 for precision networked clock synchronization. They support 10/100 Mbps data transmission rates and most of them support also IEEE 802.1Q VLAN tag detection. They support efficient data memory transfers using integrated Direct Memory Access (DMA). Data exchange mechanisms between host CPU and the MAC peripheral are based on dual-buffer (ring) or linked-list (chained) descriptors and programmable interrupts for flexible and efficient system implementation.

However, they do not support Ethernet priority and only implement one queue for transmission and reception. The proposed method can advantageously overcome such limitations as it may in some embodiments be implemented as a software, e.g. as computer-readable program code configured to be executed by a MCU or a low-cost MPU, depending on the embodiment, for causing the MCU (low-cost MPU, respectively) to implement one or more embodiments of the proposed method. Such software implementation may advantageously use a real-time operating system (RTOS) that is well suited for embedded applications using a MCU or a low-cost MPU.

MAC peripherals also typically implement sets of internal fast First-In-First-Out (FIFO) memories for transmission and reception of data packets, for example Ethernet frames.

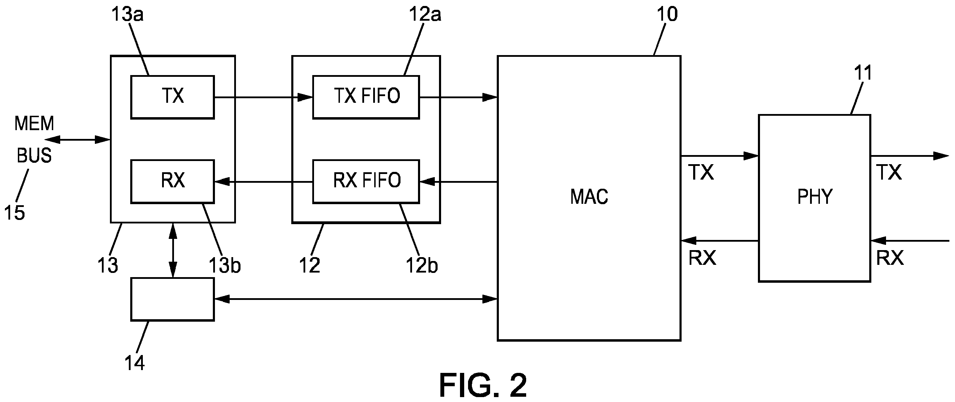

Fig. 2 shows the block diagram of an exemplary MAC controller (10) operatively connected to a physical layer (PHY) interface (11) on one end, and to a memory bus interface (15) on the other end.

Data exchanged between the MAC controller (10) and memory of the processor driving the MAC controller (10) is received from (respectively transmitted to) a memory bus (15) operatively connected to the memory of the processor, through a DMA controller (13) operatively connected to a transmit/receive (TX/RX) controller (12).

The DMA controller (13) comprises a transmission-side DMA controller (13a), and a reception-side DMA controller (13b), and is driven by a DMA control unit (14). On the data packet transmission path, the transmission-side DMA controller (13a) is configured for transmission of data packets received from the memory bus (15) to the TX/RX controller (12). On the data packet reception path, the reception-side DMA controller (13b) is configured for transmission of data packets received from the TX/RX controller (12) to the memory bus (15).

The DMA control unit (14) is operatively connected to the DMA controller (13) and to the MAC controller (10), and is configured to activate/deactivate DMA transfers. On the data packet transmission path, the TX/RX controller (12) comprises a transmission FIFO memory (12a) configured for transmission of data packets received from the transmission-side DMA controller (13a) to the DMA controller (10). On the data packet reception path, the TX/RX controller (12) comprises a reception FIFO memory (12b) configured for transmission of data packets received from the DMA controller (10) to the reception-side DMA controller (13b).

The PHY interface (11) comprises a data transmission path and a data reception path, wherein on the data transmission path data is received from the DMA controller (10) and transmitted on a physical medium, such as, on a coaxial cable for Ethernet transmission, and on the data reception path data is received from the physical medium, and transmitted to the MAC controller (10).

In one or more embodiments, a real-time system may be considered as a set of interactive real-time processes, each real-time process producing some reactions in response to external events in a finite time. A Real Time Operating System (RTOS) is an operating system whose internal processes respect hard or soft real-time requirements. The typical features of an RTOS include predictability, as task scheduling is predictable, and deterministic, as the same conditions consistently produce the same results.

Processes and, by extension, systems can be classified in one of the following categories with respect to real-time processing:
Non Real-Time: A non-real time system is a system wherein there are no deadlines involved in the system operation.
Soft Real-Time: A soft real-time system is a system wherein not meeting a deadline can have undesirable effects, but that can still be tolerated by the system. Undesirable effects include for example performance degradation.
Hard Real-Time: A hard real-time system is a system wherein not meeting a deadline can have critical effects for the system operation.

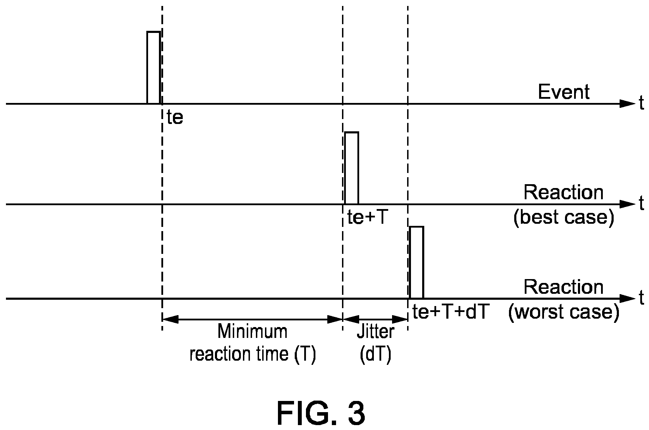

Even in a RTOS, processes never react in a constant time, because any physical process is bound to have jitter in response time at a sufficiently small time scale. Fig. 3 illustrates the response time, that is the time required by a given real-time process to react to a particular event, and its associated jitter (i.e. deviation) dT.

Figure 3 shows three time lines, illustrating respectively occurrence of an event, minimum time for occurrence of a reaction, and jitter measuring the delay between occurrence of the reaction and the minimum time for occurrence of a reaction, respectively.

The top time line illustrates occurrence of an event at a given time te. The RTOS may not react to occurrence of the event at time te before a minimum reaction time T, so that in the best case the reaction may occur at time te+T, which is shown on the intermediate time line. That is, the intermediate time line illustrates the best case scenario as to reaction timing following occurrence of an event. The bottom time line illustrates the worst case scenario as to reaction timing following occurrence of an event, with the RTOS not reacting to the occurrence of an event before the minimum reaction time T increased by a jitter of length dT, so that the reaction occurs at time te+T+dT.

There are two kinds of processes in typical embedded RTOS: tasks and Interrupt Service Routines (ISR). ISRs and tasks can be viewed as similar, with the difference that execution of an ISR cannot wait (otherwise, the system is blocked), whereas a task can wait until execution. ISR are triggered by interrupts, are executed when triggered, and then terminate. Unlike an ISR, a task can be considered as a virtual CPU inside the system with its own bank of registers and memory stack area.

RTOS provides synchronization tools to allow interactions between processes, for example between tasks and ISRs. Some specific objects are provided so that a task can wait for some external events that are triggered by an interrupt. For instance, some RTOS may provide queues, mailboxes, semaphores, and mutual exclusions.

As described above, the IEEE 802.1Qbv access control mechanism requires the Ethernet transmitter to be able to transmit certain Ethernet frames (so-called real-time Ethernet frames) at a precise time with a good accuracy (e.g. with an accuracy that is strictly inferior to 200ns) so as to limit the transmission within time slices defined in IEEE 802.1Qbv. The real-time frames typically coexist with legacy frames (that is, non-real-time frames), which may be transmitted using access control mechanisms such as ones introduced by IEEE 802.1Q. Using a non-specific Ethernet MAC controller (i.e. a controller without any specific extensions developed for TSN support such as the one illustrated on Fig. 2), several microseconds (µs) are required to start the Ethernet transmitter automata, to transfer data to the internal controller memory, and to transmit the data frame to the Ethernet physical layer controller. However, such delay performances are not compatible with the IEEE 802.1qbv requirements.

The proposed method advantageously allows the use of the IEEE 802.1Qbv access control mechanism on a non-specific Ethernet MAC controller, that is, an Ethernet MAC controller that is typically implemented on a micro-controller unit (MCU) or a low-cost micro-processor unit (MPU).

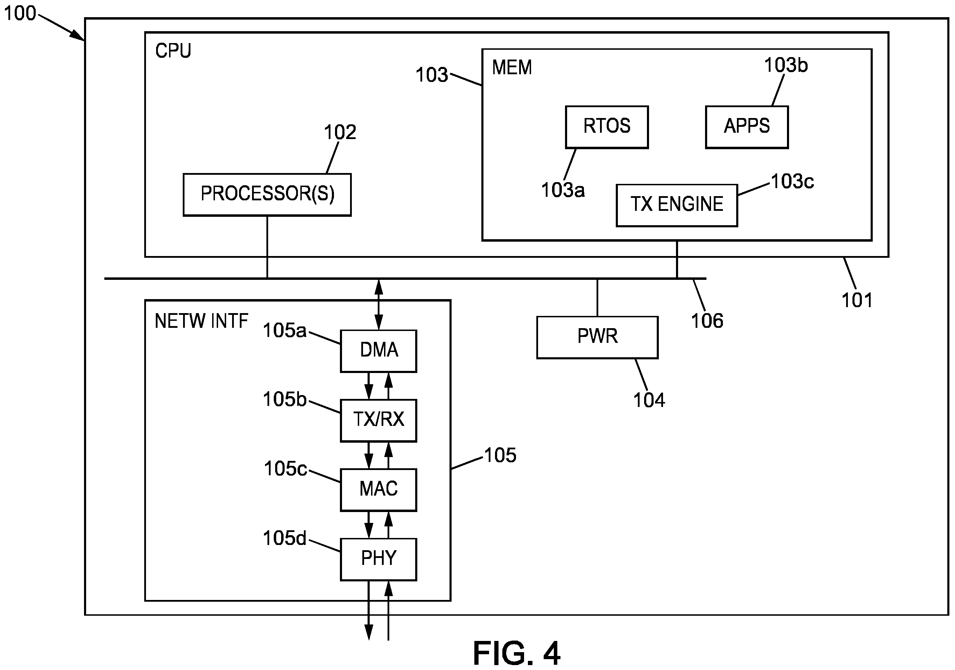

Fig. 4 is a schematic block diagram of an exemplary network node/device 100 configured to use a data packet transmission feature in accordance with embodiments of the present subject disclosure.

The network node 100 may comprise a central processing unit (CPU) (101), and network interface (105), and a power supply ((e.g., a battery, plug-in power supply, etc.) (104). The CPU (101) may comprise a control engine (102), and a memory (103).

In the architecture illustrated on Fig. 4, all of the control engine (102), memory (103), network interface (105), and power supply (104) are operatively operatively connected with one another through a system bus (106).

The control engine (102) includes one or more processors, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, the CPU (101) can be configured as a multi-processor computer having multiple processors for providing parallel computing.

The control engine (102) may also comprise, or may be in communication with, computer storage media, such as, without limitation, the memory (103), capable of storing computer program instructions or software code that, when executed by a processor of the control engine (102), causes the processor to execute a real-time operating system (103a), one or more application tasks (103b), and a transmission engine (103c). The memory (103) may be any type of data storage computer storage medium, capable of storing computer-readable program code implementing embodiments of the proposed method, may be operatively connected to the control engine (102) and operable with the transmission engine (103c) to facilitate transmission of data packets stored in association therewith.

The network interface (105) may comprise a transmission/reception (TX/RX) direct memory access (DMA) controller (105a), operatively connected to a transmission/reception (TX/RX) controller (105b) configured for controlling a transmission FIFO memory stack for transmission of data packets, and a reception FIFO memory stack for reception of data, a Media Access Controller (MAC) (105c), and a physical layer interface (105d).

In embodiments of the present subject disclosure, the network node (100) is configured for performing the data packet transmission methods described herein.

It will be appreciated that the network node (100) shown and described with reference to Fig. 4 is provided by way of example only. Numerous other architectures, operating environments, and configurations are possible. Other embodiments of the node may include fewer or greater number of components, and may incorporate some or all of the functionality described with respect to the network node components shown in Fig. 4. Accordingly, although the CPU (101), control engine (102), RTOS (103a), application tasks (103b), transmission engine (103c), memory (103), network interface (105), and power supply (104) are illustrated as part of the network node (100), no restrictions are placed on the location and control of components 101, 102, 103a, 103b, 103c, 103, 105, 104. In particular, in other embodiments, components 101, 102, 103a, 103b, 103c, 103, 105, 104 may be part of different entities or computing systems.

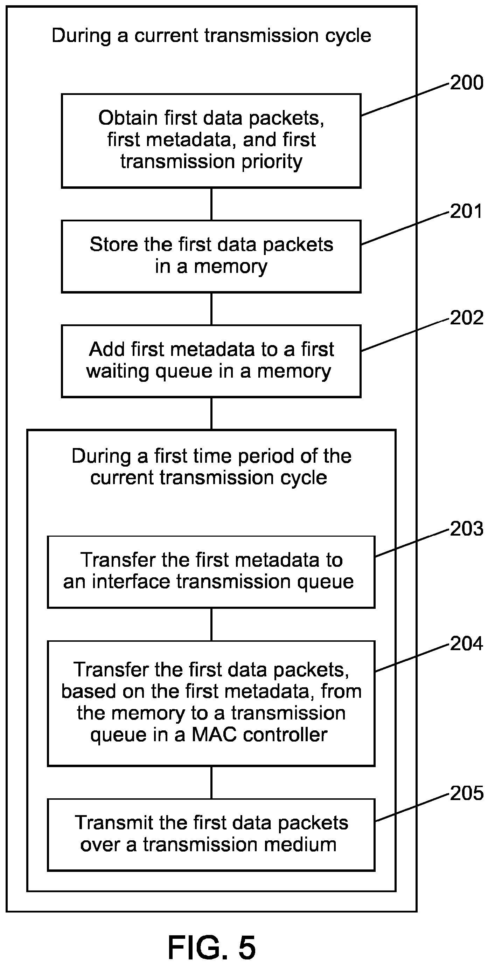

Fig. 5 illustrates an exemplary simplified flow diagram of a method for transmitting data packets according to one or more embodiments of the present subject disclosure.

In various embodiments, the time may be divided in a plurality of successive time cycles, including a current transmission cycle comprising a plurality of successive time periods. In some embodiments, each time cycle may comprise the same plurality of successive time periods.

During the current transmission cycle, one or several first data packets, respective first metadata (e.g. a memory structure containing memory reference to the buffer containing the data frame and the frame size) of the one or several first data packets, and a first transmission priority (e.g. defined for transmission in real-time of data packets) associated with the one or several first data packets may be obtained (200) by the device performing the illustrated data transmission method.

For example, the one or several first data packets may be received from one or more application tasks executed by one or more processors of a network node, such as the one illustrated on Fig. 4.

In some embodiments, a device (operating as a network node in a data communication network) configured to implement the proposed method, may receive, from one or more application tasks executed by one or more processors of the device, one or several requests for transmission of the one or several first data packets over a transmission medium. Depending on the embodiments, one or more of the requests may include the first transmission priority (e.g. defined for transmission in real-time of data packets), and/or one or more of the application tasks from which requests are received may be associated with the first transmission priority.

The one or several first data packets may then be stored (201) in a memory of a processor of a device implementing the proposed method. Based on the first transmission priority, the first metadata may be added (inserted) (202) to a first waiting queue in the memory of the processor.

For example, data packets may be received from various application tasks executed by the device, with associated metadata describing the data packets and priority information related to transmission of the received data packets. Advantageously, only the metadata associated with the received data packets may be inserted in a waiting queue (e.g. a FIFO queue), while the received data packets may be stored in memory.

During a first time period of the current transmission cycle reserved for transmission of data packets associated with the first priority, the first metadata may be transferred (203) from the first waiting queue to an interface transmission queue comprised in a data communication interface between the processor and a MAC controller.

The one or several first data packets may then be transferred (204), based on the first metadata in the interface transmission queue, from the memory to a transmission queue in the MAC controller.

Once in the transmission queue of the MAC controller, the one or several first data packets may then be transmitted (205), during the first time period, over a transmission medium.

Advantageously, a specific time period may be defined within each transmission cycle and dedicated to transmission of received data packets with a given priority. This allows defining a transmission time window reserved for transmission of data packets associated with a corresponding transmission priority, e.g. real-time data packets for which transmission is time sensitive, so that data packets associated with a different transmission priority, e.g. non real-time data packets, may not be transmitted in this transmission time window. The transmission timing of data packets associated with the corresponding transmission priority may thus be accurately controlled through the transmission time window reserved for transmission of data packets associated with the corresponding transmission priority.

The handling of non real-time data packets may be performed in one or more embodiments as follows:
A second data packet may be obtained, for example received from an application task, together with second metadata of the second data packet (e.g. a memory structure containing memory reference to the buffer containing the data frame and the frame size), and a second transmission priority (corresponding to a non-real-time transmission) associated with the second data packet. The second data packet may also be stored in the memory of the processor.

Based on the second transmission priority, the second metadata may be added to a second waiting queue, e.g. a waiting queue for non-real-time transmission of data packets, in the memory of the processor.

During the first time period, after a first priority transmission time slot dedicated to transmission of data packets with first priority (e.g. real-time data packets) and comprised in the first time period, the second metadata may be transferred from the second waiting queue to the interface transmission queue between the processor and the MAC controller.

During a second time period of the current transmission cycle following the first time period, the second packet data may be transmitted over the transmission medium through the transfer, based on the second metadata in the interface transmission queue, of the second data packet from the memory to the transmission queue in the MAC controller.

The handling of non-real-time data packets may also be performed in one or more embodiments as follows:
As described above, a second data packet may be obtained, for example received from an application task, together with second metadata of the second data packet (e.g. a data descriptor), and a second transmission priority (corresponding to a non-real-time transmission) associated with the second data packet. The second data packet may also be stored in the memory of the processor.

If the second data packet is not obtained during the first time period, the second metadata may be directly transferred to the interface transmission queue between the processor and the MAC controller, without first being transferred to the second waiting queue.

The transmission of the second data packet may then proceed as described above, that is, during a second time period of the current transmission cycle reserved for transmission of data packets associated with the second priority, the second packet data may be transmitted over the transmission medium through the transfer, based on the second metadata in the interface transmission queue, of the second data packet from the memory to the transmission queue in the MAC controller.

In one or more embodiments, the above-mentioned first transmission priority may be defined for transmission of real-time data packets, and the above-mentioned second transmission priority may be defined for transmission of non-real-time data packets.

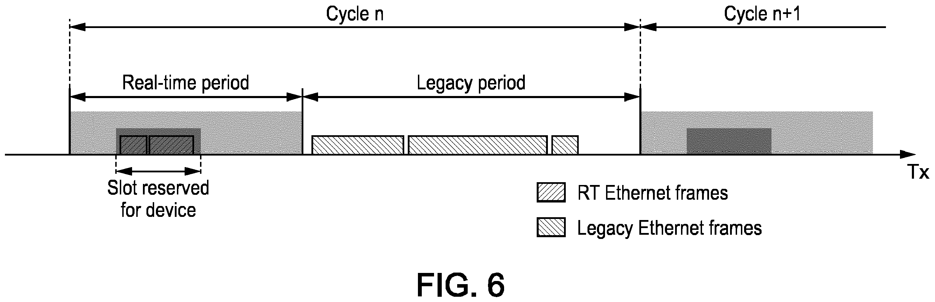

As illustrated on Fig. 6, in various embodiments, the devices implementing the proposed method may be configured to operate according to a time resource which is divided in successive cycles, each possibly of the same predefined duration, and each cycle including first a real-time period, followed by a legacy period, both periods having a duration which may, depending on the embodiment, be predefined or vary for each cycle.

In one or more embodiments, for each cycle, the real-time period may include one or more time slots reserved for one or more respective devices (network nodes) configured to implement the proposed method. Such a device may be configured to transmit data packets, e.g. Ethernet frames, during the real-time period (such a data packet is referred to in the following as a "RT Ethernet frame") only during its reserved time slot. In various embodiments, the position and duration of this time slot may be considered as static from one cycle to the following one. The device may further be configured to transmit data packets, e.g. Ethernet frames, during the legacy period without any specific time-related constraints, for example respecting the access control mechanism as defined in the 802.1Q Ethernet standard, that is, transmitting Ethernet frames strictly with priority order possibly in Full-Duplex mode. Supporting such requirements advantageously allows implementing the newly defined IEEE 801.1qbv standard.

The proposed scheme advantageously allows transmitting Ethernet frames with a predefined accuracy (such as that required by the IEEE 802.1Qbv time-aware traffic scheduler) in the time slot dedicated to RT Ethernet frames, as well as controlling the transmission of Ethernet frames in the legacy period so that there is no overflow that will lead to delaying the transmission of RT Ethernet frames.

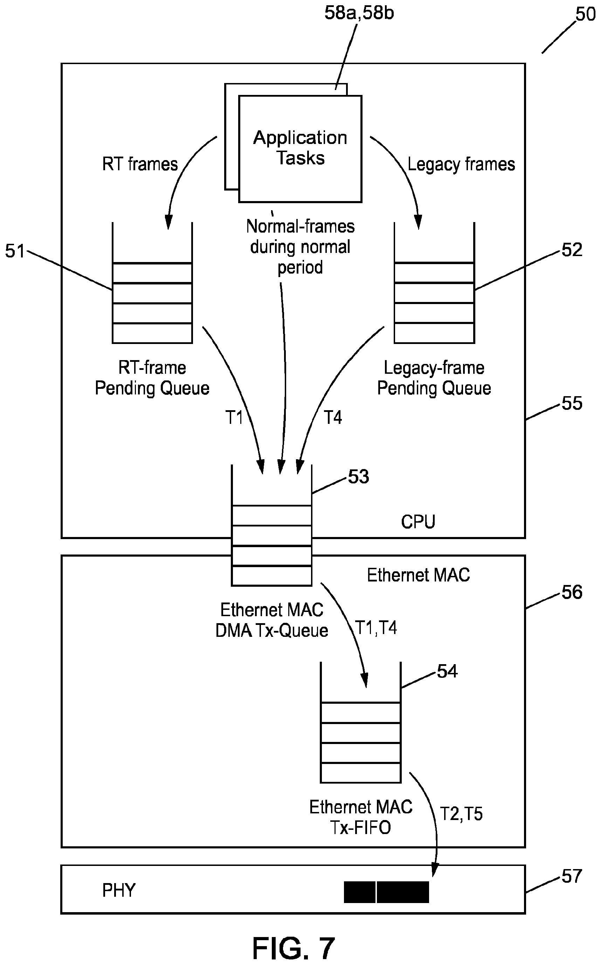

Fig. 7 illustrates an exemplary scheme for distributing data packets (e.g. Ethernet frames) over different queues according to one or more embodiments.

Fig. 7 shows a simplified diagram of a device (50) configured for implementing the proposed method, which includes a CPU (55) operatively connected to a MAC controller (56) (e.g. an Ethernet MAC controller), which is itself operatively connected to a Physical Layer (57) (e.g. an Ethernet Physical Layer).

One or more application tasks (58a, 58b) running on the CPU unit may generate data packets, e.g. Ethernet frames, to be transmitted by the device (50). The frames to be transmitted may be so-called real-time frames (also referred to as "RT frames", in the example illustrated on Fig. 7 RT Ethernet frames), for which the transmission timing should be accurately controlled or, in contrast, non-real-time frames, referred to as legacy or normal frames.

Because RT Ethernet frames may not (unlike the legacy Ethernet frames) be immediately transmitted, that is, for example, may not be transmitted immediately after being generated by an application task, a pending queue for RT frames (referred to as "RT-frame Pending Queue") (51) may be configured in the CPU (55) in one or more embodiments for storing RT Ethernet frames between the time they are generated by one or more application tasks, and the start of a dedicated time-slot during which the device (50) may transmit the RT Ethernet frames over a physical medium.

In one or more embodiments, a pending queue for legacy frames (referred to as "Legacy-frame Pending Queue") (52) may also be configured for storing legacy Ethernet frames, that is, Ethernet frames which do not require transmission in real time with a given accuracy, that are generated by one or more application tasks during the real-time period of the current cycle.

In one or more embodiments, legacy Ethernet frames may also be stored in the Legacy-frame Pending Queue (52) when the total duration of the received legacy frames exceeds the duration of the legacy period.

As shown on Fig. 7, in addition to the Legacy-frame Pending Queue (52) and RT-frame Pending Queue (51), an Ethernet MAC DMA Transmission Queue (53) may be shared in some embodiments between the CPU (55) and the Ethernet MAC controller (56). The CPU (55) may be configured to add to this queue (53) Ethernet frames originating either directly from application tasks or from one of the Legacy-frame Pending Queue (52) and RT-frame Pending Queue (51).

The Ethernet MAC controller (56) may be configured for, when the DMA transfer is enabled, dequeueing the frames from the Ethernet MAC DMA Transmission Queue (53), and start memory data transfer (DMA transfer) from the CPU memory (e.g. RAM memory) to the internal Ethernet MAC Transmission FIFO (54) (referred to as "Ethernet MAC Tx-FIFO") of the Ethernet MAC controller (56). Once the memory data transfer completed, if the Ethernet transmitter is enabled, the Ethernet frames may be transmitted to the Ethernet Physical Layer (57), which upon receipt may transmit them over a transmission medium (e.g. a transmission wire). In some embodiments, the device (50) may be configured so that DMA transfer and Ethernet transmission may be enabled/disabled independently. Once data frames are stored into the internal Ethernet MAC Transmission FIFO (54), operations are fast and suffer from very low uncertainty in term of execution time.

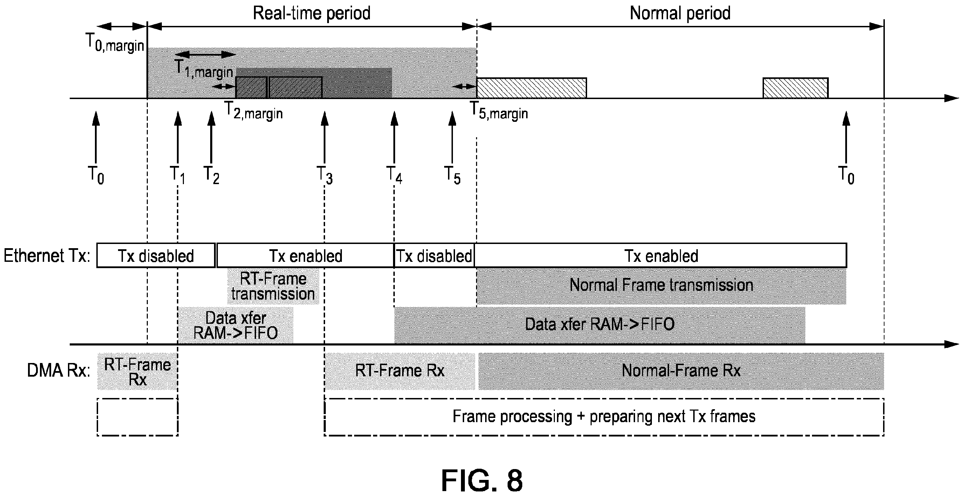

Fig. 8 illustrates some events that may be defined for each cycle, as configured in a device implementing the proposed method, for example the device of Fig. 7. Such device may be configured so that, during a cycle, the occurrence of each event triggers a specific action related to either the Ethernet MAC peripheral control, or internal processing and Ethernet frame preparation.

Fig. 8 is a diagram that shows how the events may be defined along a cycle, that is, along the real-time and legacy (normal) periods of the cycle, and the dedicated transmission time slot within the real-time period, according to one or more embodiments.

In one or more embodiments, part or all of the events (in the example illustrated on Fig. 8 the events T0, T1, T2, T4, T5) may be triggered by one or more timers managed by a timer management module, for example implemented in the transmission engine shown on Fig. 4.

Exemplary time events T0, T1, T2, T3, T4, and T5 are described below with reference to Fig. 7 and Fig. 8, which illustrate exemplary uses thereof.

A time event "T0" may be defined to correspond to the beginning of the cycle, as well as of the real-time period of the cycle in embodiments in which the real-time period in defined in the first portion of the cycle.

In some embodiments, Ethernet transmission may be disabled upon occurrence of time event T0. As a consequence, Ethernet frames may not be transmitted to the Ethernet Physical Layer (e.g. the Ethernet Physical Layer (57) of Fig. 7) by the Ethernet MAC controller (e.g. the Ethernet MAC controller (56) of Fig. 7). However, in some embodiments, transfers between the Ethernet MAC DMA Transmission Queue (53) and the Ethernet MAC Transmission FIFO (54) may still be made possible after occurrence of the time event "T0".

In some embodiments, the reception of data through the DMA process (referred to as « Rx-DMA") may be enabled for reception of RT frames upon occurrence of T0.

In some embodiments, a time margin, referred to as "T_{0,margin}", may advantageously be used to compensate a potential latency induced by the timer management and the operations executed upon the "T0" event. Therefore the transmission cycle may comprise a time guard period T_{0,margin} that occurs immediately before the real-time period, during which data transmission at the MAC controller is disabled.

A time event "T1" may be defined to trigger the preparing of RT frame transmission. Upon occurrence of T1, the metadata associated to RT pending frames may be transferred from the RT-frame Pending Queue (51) to the Ethernet MAC DMA Transmission Queue (53) (transfer referred to in the figure as "Data xfer RAM->FIFO").

In some embodiments, the transfer may be executed further to checking that the cumulative duration of RT frames does not exceed the duration of a time slot reserved for the device (50) within the real-time period. Such time slot may be defined for the device in a time division multiplexed access so as to partition the real-time period in one or more time slots respectively reserved for transmission of RT frames according to the proposed scheme by one or more devices in a data communication network.

Therefore, in some embodiments, metadata of RT frames may be added to a waiting queue (e.g., the RT-frame Pending Queue (51)) based on a determination that a data amount corresponding to a cumulative size of RT frames can be transmitted during the time slot reserved for transmission of RT frames by the device within the real-time period.

In some embodiments, the DMA transfer of frames to the Ethernet MAC Transmission FIFO (54) may also be started upon occurrence of T1.

Therefore, in some embodiments, metadata related to RT frames may be transferred, from the waiting queue in which they have been stored upon reception (e.g., the RT-frame Pending Queue (51)), to an interface transmission queue comprised in a data communication interface between the processor and a MAC controller (e.g., the Ethernet MAC DMA Transmission Queue (53)), and RT frames may be transferred from memory coupled to the processor (CPU) to a transmission queue in the MAC controller (e.g., the Ethernet MAC Transmission FIFO (54)), based on the metadata stored in the interface transmission queue, after a first predetermined time before the start of the time slot reserved for the device (50) (for example upon occurrence of time event T1).

In some embodiments, a time margin, referred to as "T_{1,margin}", may advantageously be used between the occurrence of T1 and the start of the time slot reserved for the device (50), so that the data related to the first Ethernet frame is completely transferred to the internal MAC Transmission FIFO.

In some embodiments, the reception of data through the DMA process (referred to as « Rx-DMA") may be disabled upon occurrence of T1 in order to avoid disturbance (additional jitter) due to memory access and processing of received frame, in particular in devices in which interrupt management (e.g. through interrupt service routines, ISR) is shared between data transmission and reception.

Likewise, in some embodiments, background processing, possibly including frame reception, processing and/or preparation of RT frames that will be transmitted in the next cycle that may have been started upon occurrence of T0 may be disabled upon occurrence of T1.

A time event "T2" may be defined as corresponding to the beginning of the time slot reserved for the device (50), as described above. Ethernet transmission may then be enabled upon occurrence of T2, and any frame available in the Ethernet MAC Transmission FIFO (54) may be transferred to the Ethernet Physical Layer unit (57). This transfer will typically be very short, and suffer very low jitter, so that it may advantageously be configured to be executed as part of an interrupt service routine (ISR).

Therefore, in some embodiments, the transfer of RT frames from the transmission queue in the MAC controller (e.g., the Ethernet MAC Transmission FIFO (54)) over a transmission medium may be enabled by the MAC controller during the real-time period after a second predetermined time before the start of the time slot reserved for the device (50) (for example upon occurrence of time event T2), the second predetermined time being defined so that it occurs after the above-described first predetermined time.

In some embodiments, a time margin, referred to as "T_{2,Margin}", may advantageously be used between the occurrence of T2 and the start of the time slot reserved for the device (50) to compensate a potential latency induced by the timer management and the hardware starting of the Ethernet transmitter.

A time event "T3" may be defined as corresponding to the end of transmission of the last RT frame.

In some embodiments, Rx-DMA (reception of data through the DMA process) may be enabled for reception of frames upon occurrence of time event T3.

Therefore, in some embodiments, the reception of RT frames may be disabled during the real-time period upon occurrence of time event T1 as described above, and enabled again upon occurrence of time event T3. Monitoring the end of transmission of the RT frames during the time slot reserved for the device with a time event T3 advantageously allows disabling the DMA reception of RT frames while the transmission of RT frames by the MAC controller during the time slot reserved for the device is not completed, so that potential latency (jitter) introduced by the DMA reception is avoided during transmission of RT frames by the MAC controller.

In some embodiments, background processing, possibly including frame reception, processing and/or preparation of frames (RT frames or, depending on the embodiment, RT frames during the RT period and normal frames during the normal period) that will be transmitted in the next cycle may also be started upon occurrence of T3.

A time event "T4" may be defined as corresponding to the end of the time slot reserved for the device (50).

In some embodiments, metadata associated to legacy frames pending in the Legacy-frame Pending Queue (52) may be transferred to the Ethernet MAC DMA Transmission Queue (53) (referred to in the figure as "Data xfer RAM->FIFO"), possibly further to checking that the cumulative duration of Ethernet frames does not exceed the duration of the legacy period. Therefore legacy frames may be transferred from a waiting queue in which they are pending (e.g. the Legacy-frame Pending Queue (52)) to an interface transmission queue comprised in a data communication interface between the processor and the MAC controller (e.g. the Ethernet MAC DMA Transmission Queue (53)) during the real-time period after the end of the time slot reserved for the device (for example as of occurrence of the T4 time event).

In some embodiments, Ethernet transmission may be disabled upon occurrence of T4. Therefore, in some embodiments the RT frames may be transmitted with real time priority that is, transmitted by the MAC controller during the time slot reserved for the device for transmission of data with RT priority, with the time slot reserved for the device being included in the real-time period of the current cycle. Data transmission at the MAC controller may be disabled for one or more periods other than the time slot reserved for the device, that is, during a first transmit disable time period and/or a second transmit disable time period, where the first transmit disable time period occurs during the real-time period before the time slot reserved for the device (for example, for the period starting at T0, and ending at T2), and the second transmit disable time period occurs during the real-time period after the time slot reserved for the device (for example, for the period starting at T4, and ending at T5 as described below).

A time event "T5" may be defined as corresponding to the beginning of the legacy period. In some embodiments, Ethernet transmission may be enabled upon occurrence of T5 (same operation as related to occurrence of T2, that is, any frame available in the Ethernet MAC Transmission FIFO (54) may be transferred to the Ethernet Physical Layer unit (57)). In some embodiments, the next T0, T1, T2, T4, and T5 timers may be programmed upon occurrence of T5.

In some embodiments, Rx-DMA (reception of data through the DMA process) may be enabled for reception of frames upon occurrence of T5.

In some embodiments, a time margin, referred to as "T_{5,Margin}", may advantageously be used between the occurrence of T5 and the start of the legacy period to compensate a potential latency induced by the timer management and the hardware starting of the Ethernet transmitter.

A proposed queue management scheme according to one or more embodiments is described hereinafter:
For each period (real-time period and normal (legacy) period), one or more state variables, respectively denoted S_{RT} for the real-time period, and S_{Le} for the legacy period, may be used in one or more embodiments to maintain the remaining free time in the respective period. Further, at any time t, a state variable Pₜ may be used to indicate the type of the current period (either "RT" or "Legacy"). At the beginning of the cycle, both variables may be initialized to the respective duration of each period. For example, S_{RT} may be initialized to the duration of the real-time period, and S_{Le} may be initialized to the duration of the Legacy period.

In some embodiments, upon the occurrence of a T1 event, frames of the RT-Frame Pending Queue (51) may be dequeued and enqueued to the MAC DMA Transmission Queue (53) while the state variable S_{RT} is greater than the duration of the frame located at the head of the queue. The S_{RT} state variable may be managed so that each time a RT frame is added to the MAC DMA Transmission Queue (53), S_{RT} is decremented by a value corresponding to the frame duration.

In some embodiments, the same management process may be applied for the S_{Le} state variable upon occurrence of a T4 event between the Legacy-frame Pending Queue (52) and the MAC DMA Transmission Queue (53). That is, upon the occurrence of a T4 event, frames of the Legacy-frame Pending Queue (52) may be dequeued and enqueued to the MAC DMA Transmission Queue (53) while S_{Le} is greater than the duration of the frame located at the head of the queue. The S_{Le} state variable may be managed so that each time a Legacy frame is added to the MAC DMA Transmission Queue (53), S_{Le} is decremented by a value corresponding to the frame duration.

In some embodiments, application tasks that must transmit a RT frame may post it first in the RT-frame Pending Queue (51).

In some embodiments, application tasks that must transmit a legacy frame may post it in the Legacy-frame Pending Queue (52) in the case where the state variable Pₜ is set to "RT" (t being the current time). In the case where Pₜ is set to "Legacy", the legacy frame may be posted in the MAC DMA Transmission Queue (53) if the S_{Le} and the time before the end of the legacy period are greater than the frame duration.

This proposed queue management scheme ensures the respect of the defined periods, and also advantageously optimizes the transmission time of legacy Ethernet frames. Indeed, legacy Ethernet frames prepared by tasks are susbtantially immediately transmitted if the current period is dedicated to legacy frames.

A proposed timer management scheme according to one or more embodiments is described hereinafter:
In one or more embodiments, a timer management module may be implemented and configured to be triggered by a clock (e.g. a Precision Time Protocol (PTP) clock), and to execute specific actions either in legacy thread mode or under ISR (Interrupt Service Routine) mode for better accuracy.

As discussed above, in some embodiments the number of actions to be executed in an ISR may be restricted in order to reduce the execution latency of further ISRs. Such an execution mode is useful since it avoids using notification mechanisms between ISR and RTOS tasks, which reduces the latency (and associated jitter) required to execute the triggered action.

For example, in some embodiments, the timer management module may be configured to use a single hardware timer, and to use a chained list of event contexts. It may execute a timer management RTOS task configured for programming the next timer target value and executing the event actions. Each time the hardware timer is triggered with respect to occurrence of an event, the hardware timer may be reprogrammed with respect to occurrence of the next event on the chained list. The use of a single timer to manage a plurality of events in a sequence advantageously allows ensuring a limited execution jitter for each occurrence of event (for example, it avoids parsing several chained lists to execute a task associated with a timer), so as to achieve an execution jitter with a given accuracy.

In some embodiments, each event context may include a targeted time, an event action (in some embodiments represented by an address where corresponding computer-readable program code is be executed), and possibly a flag indicating whether the triggered action is be executed directly inside the ISR or in the timer management task.

In some embodiments, the list may be time-ordered in order to speed-up the processing of the chained-list event contexts, and an event with a lower timestamp may be put at the head of the chained list. In such embodiments, when the hardware timer expires, the appropriate ISR may be executed, and the event action associated with the event context at the head of the chained list may be executed if the corresponding flag is set. In embodiments, the timer management task may be awakened upon execution of the ISR (even if the flag does not require so, or in embodiments where a flag is not used), in order to execute the associated event action if not already executed, de-queue the event context at the head of the chained list, and program the next timer target value based on the event context newly located at the head of the chained list.

Such embodiments will advantageously reduce the time latency and the jitter for the execution of the actions associated to an event.

As discussed above, the execution time for some events triggered by a timer may in one or more embodiments be evaluated so that the timer can be anticipated in order to compensate the delay. In particular, referring to the above-described embodiments in reference to Figs. 7 and 8, it is important to precisely compensate for the delay of the event triggered by the T2 timer in order to achieve a required time accuracy. However, this delay compensation is not so easy to calculate and will depend on many factors such as CPU frequency, cache architecture, size of code...

In order to address this problem, an automatic calibration method is proposed according to one or more embodiments in order to determine the amount of time required by the system to enable the Ethernet transmitter during the operations executed in the T2 event. The proposed scheme relies on the hardware timestamping performed by the MAC controller on some specific frames. Hardware timestamping may be performed using the above-mentioned clock (e.g. a PTP clock), and contains the precise time of the frame transmission at PHY level. Comparing this value with the expected transmission time allows determining the global execution time delay. This delay includes execution time of ISR routines, program code used for timer management and program code used for T2 related actions.

In some embodiments, in each cycle, the first frame transmitted in the real-time period may be tagged so that transmission timestamping is executed at lower level. The mean delay is calculated and applied as the T2 margin to compensate the T2 timer.

Methods and apparatuses of the present subject disclosure can advantageously be implemented in low-cost devices with communication interfaces (for example, Ethernet communication interfaces) such as sensors/actuators in critical networks (factory automation, automotive). They further enable compatibility with TSN standard protocols, providing deterministic messaging on standard Ethernet. They may advantageously be used to run on low-cost MCU/MPU platforms with non-specific Ethernet MAC integrated peripheral.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for transmitting data packets, comprising, during a current transmission cycle in a plurality of successive time cycles, the current cycle comprising a plurality of successive time periods:
- obtaining one or several first data packets, respective first metadata of the one or several first data packets, and a first transmission priority associated with the one or several first data packets, wherein the one or several first data packets are stored in a memory of a processor;
- based on the first transmission priority, adding the first metadata to a first waiting queue in the memory of the processor;
- during a first time period of the current transmission cycle reserved for transmission of data packets associated with the first priority,
∘ transfer the first metadata from the first waiting queue to an interface transmission queue, wherein the interface transmission queue is comprised in a data communication interface between the processor and a MAC controller; and
∘ transmit the one or several first data packets over a transmission medium through the transfer, based on the first metadata in the interface transmission queue, of the one or several first data packets from the memory to a transmission queue in the MAC controller.

2. The method according to claim 1, further comprising:
- obtaining a second data packet, second metadata of the second data packet, and a second transmission priority associated with the second data packet, wherein the second data packet is stored in the memory of the processor;
- based on the second transmission priority, adding the second metadata to a second waiting queue in the memory of the processor;
- during the first time period, after a first priority transmission time slot dedicated to transmission of data packets with first priority and comprised in the first time period, transfer the second metadata from the second waiting queue to the interface transmission queue; and
- during a second time period of the current transmission cycle following the first time period, transmit the second packet data over the transmission medium through the transfer, based on the second metadata in the interface transmission queue, of the second data packet from the memory to the transmission queue in the MAC controller.

3. The method according to claim 1, further comprising:
- obtaining a second data packet, second metadata of the second data packet, and a second transmission priority associated with the second data packet, wherein the second data packet is stored in the memory of the processor;
- if the second data packet is not obtained during the first time period, adding the second metadata to the interface transmission queue; and
- during a second time period of the current transmission cycle reserved for transmission of data packets associated with the second priority, transmit the second packet data over the transmission medium through the transfer, based on the second metadata in the interface transmission queue, of the second data packet from the memory to the transmission queue in the MAC controller.

4. The method according to any of the preceding claims, wherein the first transmission priority is for transmission in real-time of data packets, and the second transmission priority is for transmission in non-real-time of data packets.

5. The method according to any of the preceding claims, further comprising: receiving, from one or several first tasks executed by the processor, one or several requests for transmission of the one or several first data packets over the transmission medium, wherein each request includes the first transmission priority, or one or more of the first tasks is associated with the first transmission priority.

6. The method according to any of the preceding claims, wherein the one or several first data packets are transmitted by the MAC controller during a first priority transmission time slot dedicated to transmission of data packets with the first priority, and comprised in the first time period, the method further comprising: disabling data transmission at the MAC controller during a first transmit disable time period and/or a second transmit disable time period, wherein the first transmit disable time period occurs during the first time period before the first priority transmission time slot, and the second transmit disable time period occurs during the first time period after the first priority transmission time slot.

7. The method according to any of the preceding claims, wherein the current transmission cycle comprises a time guard period occurring immediately before the first time period, during which data transmission at the MAC controller is disabled.

8. The method according to any of claims 2 and 5, wherein the second data packet is transferred from the second waiting queue to the interface transmission queue during the first time period after the end of the first priority transmission time slot.

9. The method according to claim 5, wherein the first metadata is transferred from the first waiting queue to the interface transmission queue, and the one or several first data packets are transferred, based on the first metadata in the interface transmission queue, from the memory to the transmission queue during the first time period after a first predetermined time before the start of the first priority transmission time slot.

10. The method according to claim 5, further comprising: enabling the transmission, by the MAC controller, of the one or several first data packets over the transmission medium during the first time period after a second predetermined time before the start of the first priority transmission time slot.

11. The method according to claim 9, further comprising: disabling the reception of data packets with the first transmission priority during the first time period after the first predetermined time and while the transmission of data packets of first transmission priority by the MAC controller, during a first priority transmission time slot, is not completed.

12. The method according to any of the preceding claims, further comprising: adding the first metadata to the first waiting queue based on a determination that a data amount corresponding to a cumulative size of corresponding first data packets associated with the first transmission priority can be transmitted during a first priority transmission time slot dedicated to transmission of data packets with first priority and comprised in the first time period.

13. An apparatus comprising a processor, a memory operatively connected to the processor, and network interfaces to communicate in a computer network, wherein the apparatus is configured to perform a method for transmitting data packets according to any of claims 1 to 12.

14. A computer program product comprising computer program code tangibly embodied in a computer readable medium, said computer program code comprising instructions to, when provided to a computer and executed, cause said computer to perform a method for transmitting data packets according to any of claims 1 to 12.

15. A data set representing, for example through compression or encoding, a computer program according to claim 14.
